# FASCICULE DE BREVET EUROPEEN

(11) **EP 3 380 312 B1**
(45) Date de publication et mention de la délivrance du brevet: **01.01.2020**
(21) Numéro de dépôt: 16815880.6
(22) Date de dépôt: 23.11.2016
(51) Int. Cl.: B29D 30/24

(54) **TAMBOUR ET PROCEDE D'ASSEMBLAGE D'UN ADAPTATEUR DE PNEUMATIQUE SUR UNE JANTE**
TROMMEL UND VERFAHREN ZUR MONTAGE EINES REIFENADAPTERS AUF EINER RADFELGE
DRUM AND METHOD FOR ASSEMBLING A TYRE ADAPTER ON A WHEEL RIM

(30) Priorité: 25.11.2015 FR 1561358
(43) Date de publication de la demande: 03.10.2018
(73) Titulaire: Compagnie Générale des Etablissements Michelin, 63000 Clermont-Ferrand (FR)
(72) Inventeur: GUY, Thomas, 63040 Clermont-Ferrand Cedex 9 (FR); MARCHAL, Patrick, 63040 Clermont-Ferrand Cedex 9 (FR); HINC, Henri, 63040 Clermont-Ferrand Cedex 9 (FR); HERNANDEZ, David, 63040 Clermont-Ferrand Cedex 9 (FR)
(74) Mandataire: Noel, Luminita
(86) Numéro de dépôt international: PCT/FR2016/053061
(87) Numéro de publication internationale: WO 2017/089703

(56) Documents cités:
- EP-A1- 0 953 434
- EP-B1- 1 347 875
- DE-B- 1 172 841
- US-A- 4 126 507
- US-A- 4 229 246
- US-A- 4 685 992

## Description

L'invention concerne un tambour et un procédé d'assemblage pour la fabrication d'un adaptateur de pneumatique utilisé pour le montage du pneumatique sur une jante.

On connaît du document WO 00/78565 un tel adaptateur réalisé à base de mélanges de caoutchouc renforcés et déformables élastiquement dans les directions axiale et radiale, deux adaptateurs reliant la jante aux bourrelets du pneumatique permettent d'améliorer les propriétés de ce dernier.

Plus particulièrement, un tel adaptateur comprend généralement un bourrelet intérieur qui assure l'accrochage de l'adaptateur sur la jante, un bourrelet extérieur destiné à recevoir le bourrelet du pneumatique, les bourrelets intérieur et extérieur étant reliés par une armature de renforcement permettant la déformation élastique de l'adaptateur dans les directions radiale et axiale. Un tel adaptateur est réalisé en empilant différents produits à base de mélanges de caoutchouc sur un support et est ensuite vulcanisé dans un moule à l'intérieur d'une presse de vulcanisation afin qu'il acquière les propriétés d'élasticité souhaitées.

De par ses fonctions et compte tenu de nécessités de montage, l'adaptateur a une forme générale tubulaire conique de profil bien spécifique. En effet, la forme de la section de l'adaptateur est déterminée par la forme de la section de la jante et par le type de pneu associé, et de ce fait, son profil est souvent complexe. De plus, la déformation dans les deux directions axiale et radiale de l'adaptateur doit avoir des valeurs prédéterminées très précises et, de ce fait, l'adaptateur doit respecter des conditions dimensionnelles assez strictes. Pour satisfaire ces conditions, on envisage de réaliser l'assemblage des différents composants par une pose successive sur un noyau rigide, ensuite une vulcanisation dans un moule adapté. Présentant une bonne précision de réalisation, cette solution doit toutefois faire appel à des outillages très complexes, nécessitant un investissement important.

Pour fabriquer de manière industrielle et économique un tel adaptateur, compte tenu de sa constitution et de sa structure qui sont à base des renforts et des produits caoutchouteux, tels des nappes ou des profilés apparentés à ceux utilisés pour la fabrication d'un pneu, on a envisagé par ailleurs l'utilisation d'un tambour d'assemblage. Toutefois, un tel tambour doit satisfaire plusieurs conditions, une première étant de présenter des sites de réception des bourrelets de diamètres différents.

La publication EP 0 953 434 décrit un tambour d'assemblage pour la fabrication de pneumatique ayant des bourrelets de diamètres différents. Ce tambour comporte à ses extrémités des gorges de réception de bourrelets de diamètres différents et une virole escamotable venant recouvrir a gorge de plus faible diamètre pour présenter une surface cylindrique de réception pour la pose des produits constitutifs de l'armature de carcasse. La virole est ensuite retirée axialement à l'extérieur du tambour pour réaliser le retroussage des produits posés sur le tambour. Permettant, certes de réaliser des ébauches de pneumatique à bourrelets de diamètres différents, la présence d'une telle virole nécessite un réglage et un positionnement précis par rapport au tambour et son déplacement par rapport au tambour a des conséquences sur l'encombrement de celui-ci.

Une solution à ces problèmes est décrite dans la publication EP 1 347 875 qui décrit un tambour d'assemblage expansible pour la fabrication de pneumatique comportant une surface centrale cylindrique dont les extrémités ont des diamètres différents ainsi que des dispositifs de relevage des extrémités de l'armature de carcasse qui sont expansibles avec le tambour et également ajustables à chaque diamètre en position expansée de celui-ci. Fonctionnant à satisfaction pour réaliser l'assemblage d'un pneumatique, ce tambour ne convient toutefois pas à l'assemblage d'un adaptateur de pneumatique sur jante qui, en plus de sa forme qui est différente de celle d'un pneu, il présente des bourrelets de diamètre différents mais qui sont situés à faible distance, en général ne dépassant pas 60mm, l'un de l'autre.

On connaît par ailleurs du document DE 1 172 841 un tambour de finition d'une ébauche de pneumatique comportant deux séries de segments de largeur différente alternés circonférentiellement et aptes à passer d'une première position expansée dans laquelle la face externe du tambour à une forme cylindrique à une position collapsée dont la face externe a une forme tronconique de diamètre moindre pour permettre l'extraction de l'ébauche. Le collapsage des segments d'une série se fait en différé par rapport à ceux de l'autre série. Un tel tambour ne permet pas la confection d'ébauche d'adaptateur pour pneumatique comportant deux tringles de diamètres différents.

L'invention a pour but un tambour et un procédé d'assemblage d'adaptateur de pneumatique sur jante permettant de remédier au moins en partie aux inconvénients précités et de pouvoir fabriquer de manière économique un tel adaptateur.

A cet effet, l'invention propose un tambour d'assemblage expansible radialement destiné à la fabrication d'un adaptateur de pneumatique sur une jante, ledit tambour comportant un arbre central, un premier ensemble de segments et un deuxième ensemble de segments, tous les segments étant disposés circonférentiellement autour de l'arbre pour former une face externe de forme sensiblement cylindrique du tambour, caractérisé en ce les segments du premier ensemble et les segments du deuxième ensemble se font face axialement et en ce que ledit tambour est agencé pour permettre une expansion radiale différente des segments du premier ensemble par rapport aux segments du deuxième ensemble de segments entre deux positions de travail.

Le tambour de l'invention permet de réaliser l'assemblage des différents composants de l'ébauche d'adaptateur de pneumatique sur jante, l'adaptateur comportant deux tringles de diamètres différents, par une pose dite « à plat » dans la position rétractée (ou première position de travail) du tambour réglé de sorte que les segments de chaque ensemble soient au même diamètre, générant ainsi une surface externe cylindrique permettant une pose aisée des produits. Selon l'invention, les segments du premier ensemble et les segments du deuxième ensemble se font face axialement et le tambour réalise, dans une deuxième position de travail, une expansion radiale différente des segments d'un ensemble par rapport aux segments de l'autre ensemble. Par segments se faisant face axialement ou juxtaposés axialement on comprend des segments qui se trouvent sur la même génératrice du tambour, l'un en face de l'autre. Autrement dit les segments du premier et du deuxième ensemble sont disposés avec leur axe longitudinal dans un même plan vertical qui intersecte l'axe de rotation du tambour. Les segments du premier et du deuxième ensemble peuvent être situés à distance ou proches axialement sur une même génératrice du tambour.

De préférence, les segments du premier et deuxième ensemble ont la même largeur afin de former une face externe de forme générale cylindrique lorsqu'ils sont en position rétractée du tambour et permettre ainsi une pose à plat correcte des différents composants à base de gomme.

Le tambour comprend par ailleurs des moyens permettant le déplacement radial des secteurs du premier ensemble et de ceux du deuxième ensemble de manière à ce qu'un décalage radial se forme entre les deux ensembles à partir du début de l'expansion du tambour et jusqu'en la position complètement expansée du tambour. Ceci permet, après avoir réalisé la pose à plats des composants caoutchoutiques et des deux tringles de l'ébauche, d'enserrer les deux tringles de diamètres différents au sein des nappes déjà posées en effectuant, jusque dans une deuxième position de travail, une expansion radiale dissymétrique du tambour, tel que vu par rapport à un plan médian vertical qui est orthogonal à l'axe principal autour duquel s'effectue la rotation du tambour.

Selon un aspect avantageux de l'invention, la face externe de chaque segment comporte une gorge de réception de tringle. Ceci permet de positionner et ensuite d'enserrer une tringle au sein des nappes posées sur les segments lors de la confection de l'ébauche d'adaptateur.

Avantageusement, le tambour comporte des moyens de déplacement des segments entre une première position de travail dans laquelle les segments du premier et du deuxième ensemble sont en position rétractée et la face externe du tambour est de forme sensiblement cylindrique et a un même diamètre sur sa longueur et une deuxième position de travail dans laquelle les segments sont en position expansée de manière à ce que les segments du deuxième ensemble présentent un diamètre supérieur aux segments du premier ensemble et la face externe comporte deux parties de forme sensiblement cylindrique de diamètres différents.

Ainsi, lors de l'expansion du tambour, on imprime une trajectoire purement radiale aux segments du premier ensemble ainsi qu'aux segments du deuxième ensemble, ce qui permet de conserver constante la distance entre les tringles pendant la fabrication.

De préférence, la face axialement interne des segments du premier ensemble comporte des dents qui s'interpénètrent axialement avec les dents de la face axialement externe des segments du deuxième ensemble. Ceci permet d'assurer une continuité en direction axiale de la face externe du tambour entre les deux parties cylindriques de diamètres différents du tambour en position expansée, ainsi que lors de la transition des segments entre la position rétractée et expansée.

De préférence, le déplacement des segments du première ensemble et des segments du deuxième ensemble se fait de manière synchrone et en continu. Ceci permet la bonne mise en place des nappes de gomme et l'allongement progressif de celles-ci lors de l'expansion des segments.

Dans une variante, on déplace de manière indépendante un ensemble de secteurs par rapport à l'autre, par exemple à l'aide de deux moteurs électriques entraînant chacun un ensemble de segments.

Avantageusement, le tambour comprend un seul moyen d'entrainement en déplacement des deux ensembles de segments du tambour simultanément. Ceci permet de déplacer en même temps tous les segments des deux ensembles pour plus de précision et une meilleure mise en tension des nappes.

De préférence, que ledit moyen d'entraînement est agencé pour déplacer les deux ensembles de segments à des vitesses différentes, l'un par rapport à l'autre. Ceci permet à tous les segments simultanément d'atteindre rapidement la position expansée du tambour.

Avantageusement, chaque ensemble de segments est déplacé en translation radiale à l'aide d'un dispositif à vis et écrou et chaque vis reçoit le mouvement de rotation dudit arbre central. Un tel dispositif permet de transformer le mouvement de rotation de l'arbre central en un mouvement de translation axiale de l'écrou qui le transmet ensuite à un ensemble de segments.

De préférence, l'une des vis du dispositif reçoit le mouvement de rotation dudit arbre central moyennant un train de pignons à rapport réducteur. Ceci permet à l'une des vis de tourner moins vite que l'autre et d'obtenir un déplacement différent d'un ensemble de segments par rapport à l'autre.

Avantageusement, les pignons dudit train sont interchangeables et sont montés à possibilité de synchronisation en toute position relative. Ceci permet de changer la vitesse et donc la valeur du déplacement radial d'un ensemble de segments par rapport à l'autre, ainsi que le diamètre de la surface externe cylindrique du tambour dans la première position de travail.

De préférence, chaque ensemble de segments du tambour est relié à au dispositif à vis et écrou par un mécanisme à biellettes articulées. Ceci permet de transformer le mouvement axial de l'écrou en un mouvement radial des segments lorsque ces derniers sont situés à faible distance axiale les uns par rapport aux autres.

Avantageusement, le tambour comporte un manchon flexible agencé pour recouvrir sa face externe. Ceci permet d'avoir une face externe lisse ce qui permet de préserver l'intégrité des nappes en matériau caoutchoutique qui sont posées sur le tambour d'assemblage.

De préférence, le tambour comporte un dispositif de retroussage situé chacun à une extrémité du tambour et expansible radialement en même temps qu'un ensemble de segments. Ceci permet de finaliser l'assemblage par retroussage des bords des nappes avec des dispositifs qui sont à proximité de ceux-ci.

Avantageusement, lesdits dispositifs de retroussage sont escamotables sous la face externe du tambour afin de ne pas interférer avec la pose des composants de l'ébauche sur le tambour.

De préférence, le tambour comporte des moyens d'actionnement en un mouvement de translation axiale d'un dispositif de retroussage. Ceci permet au dispositif de repousser les bords des nappes sur la face ascendante des segments du premier ensemble afin de les faire passer au-dessus de la tringle.

Avantageusement, le tambour comporte des moyens d'actionnement en un mouvement de translation axiale et en un mouvement de translation radiale d'un dispositif de retroussage. Ceci permet au dispositif de repousser les bords des nappes sur la face descendante des segments du deuxième ensemble afin de les faire passer au-dessus de la tringle.

Les buts de l'invention sont également atteints avec un procédé d'assemblage pour la fabrication d'un adaptateur de pneumatique sur une jante comportant les étapes suivantes :
- poser les composants caoutchouteux sur une surface cylindrique d'un tambour expansible radialement comportant deux ensembles de segments se faisant face axialement en l'entraînant en rotation;
- poser deux tringles sur les composants caoutchouteux dans des gorges prévues à cet effet dans chaque ensemble de segments ;
- réaliser une expansion radiale différente des segments du premier ensemble par rapport aux segments du deuxième ensemble de segments entre deux positions de travail, pour serrer les tringles à l'intérieur des composants caoutchouteux.

Avantageusement, on réalise le serrage de la tringle ayant le plus petit diamètre dans une gorge prévue à cet effet dans le premier ensemble de segments avant de réaliser le serrage de la tringle de plus grand diamètre. Ainsi, lorsque la tringle de plus faible diamètre est bloquée, le glissement des produits sur la face inclinée conique du tambour est mieux maîtrisé pour plus de précision.

De préférence, le procédé selon l'une des revendications comprend des étapes de retroussage des extrémités des composants caoutchouteux autour des tringles.

L'invention sera mieux comprise grâce à la suite de la description, qui s'appuie sur les figures suivantes :
- la figure 1 est une vue en perspective d'un adaptateur coupé avec un plan passant par son axe de symétrie ;
- la figure 2 est une vue en perspective d'un tambour d'assemblage selon l'invention ;
- la figure 3 est une vue en coupe axiale du tambour de l'invention illustré en deux positions de fonctionnement ;
- la figure 4 est une autre vue en coupe axiale du tambour de la figure 2 ;
- les figures 5a à 5c illustrent des vues de détail du mécanisme d'actionnement d'un des dispositifs de retroussage dans différentes positions de fonctionnement de celui-ci ;
- les figures 6a à 6h illustrent de manière schématique différentes étapes du procédé de fabrication d'une ébauche crue d'adaptateur selon l'invention ;
- la figure 7 est une vue en perspective d'un autre dispositif de retroussage ;
- les figures 8a à 8c illustrent par une vue en perspective et des vues en coupe une variante de réalisation du dispositif de retroussage de la figure 7.

Sur les différentes figures, les éléments identiques ou similaires portent la même référence. Leur description n'est donc pas systématiquement reprise.

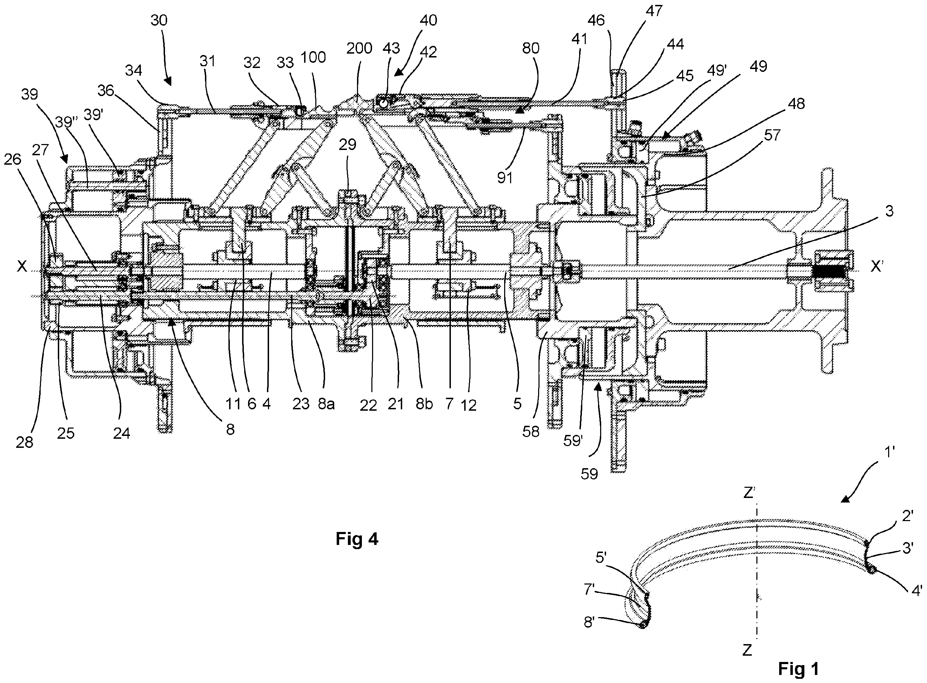

La figure 1 illustre un adaptateur 1' coupé avec un plan passant par son axe de symétrie Z-Z'. L'adaptateur 1' est destiné à être monté entre une jante et un pneumatique (non représentés) pour former un ensemble du type décrit dans le document WO 00/78565 au nom de la demanderesse. L'adaptateur 1' comprend à cet effet un bourrelet 2' d'adaptateur servant à la fixation sur une jante, une armature 3' d'adaptateur qui relie le bourrelet 2' à un renfort 4' d'adaptateur apte à se fixer autour du bourrelet d'un pneumatique. L'adaptateur 1' est une pièce de forme générale annulaire ayant une symétrie de révolution autour de l'axe Z-Z'.

L'armature 3' de l'adaptateur 1' est formée à base d'une nappe principale de câbles textiles parallèles entre eux et radiaux englobés dans une base de caoutchouc, telle une nappe carcasse. Cette nappe est agencée de manière à former un retournement autour du renfort 4' de l'adaptateur et, d'autre part, elle est ancrée dans le bourrelet 2' de l'adaptateur 1' en formant également un retournement. Le bourrelet 2' d'adaptateur comprend une petite tringle 5' métallique autour de laquelle est formé ledit retournement. Le renfort 4' comprend une grande tringle 8' qui est un tube métallique, ou une tringle pleine réalisée en un matériau composite, ou une tringle paquet (par tringle paquet on comprend une tringle comportant plusieurs couches superposées d'enroulements circonférentiels d'un fil), ou encore une tringle métallique tressée, autour desquels sont agencées les différentes nappes à base de caoutchouc. La nappe principale est complétée par une ou plusieurs nappes secondaires, telles une nappe de protection agencée sur la face externe 6' de l'adaptateur, voire d'une nappe d'étanchéité ou gomme intérieure, agencée sur la face interne 7' de l'adaptateur, ou par d'autres gommes de remplissage ou de bourrage au niveau des tringles, tel qu'il sera expliqué par la suite. La différence de diamètre entre le bourrelet 2' et celui du renfort 4' est d'environ 1".

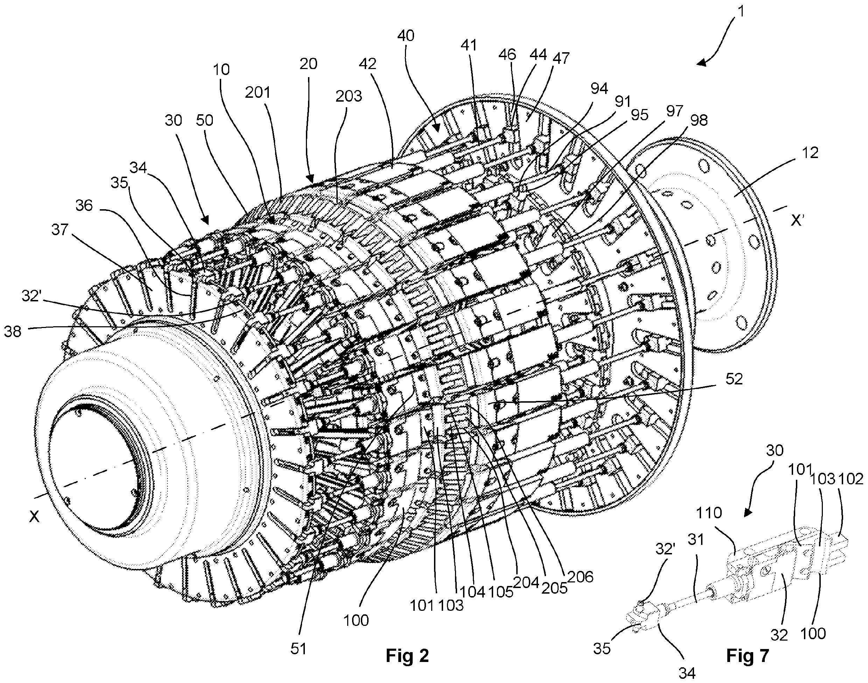

La figure 2 illustre un tambour 1 d'assemblage selon l'invention destiné à la fabrication d'un adaptateur de jante sur un pneumatique, l'ébauche crue obtenue par assemblage étant ensuite vulcanisée dans un moule. Le tambour 1 est monté sur un bâti (non représenté) comportant également des moyens mécaniques aptes à mettre le tambour en rotation autour d'un axe central X-X', par exemple par couplage et entraînement d'un flasque 12 du tambour. Dans ce qui suit les directions radiale et axiale sont définies par rapport à l'axe central X-X' qui est également un axe de symétrie du tambour.

Le tambour 1 comprend un premier ensemble 10 de segments 100 et un deuxième 20 ensemble de segments 200 qui se font face axialement ou autrement dits sont juxtaposés axialement. Les segments 100, 200 de chaque ensemble sont agencés circonférentiellement en périphérie du tambour pour former une face circonférentielle externe 50 du tambour qui forme la face de travail sur laquelle sont disposés les éléments de l'ébauche. Le segments 100, 200 ont une même largeur en direction circonférentielle, leur longueur axiale respective étant choisie en fonction des dimensions de l'adaptateur à confectionner. La face externe 50 a, dans la position rétractée du tambour, une forme générale cylindrique à section circulaire dans un plan perpendiculaire à l'axe X-X'. Chaque ensemble de segments est agencé de manière à pouvoir passer d'une position rétractée à une position expansée et vice-versa. Dans la position expansée du tambour, tel que visible à la fig. 2, les segments 100 forment une face externe 51 de forme cylindrique de diamètre plus petit que celui de la face externe 52 de forme cylindrique des segments 200.

Le tambour comprend également des dispositifs de retroussage 30, 40 des nappes en matériau caoutchoutique déposées sur la face externe 50. Chaque dispositif de retroussage est situé à une extrémité du tambour et est expansible radialement en même temps qu'un ensemble de segments.

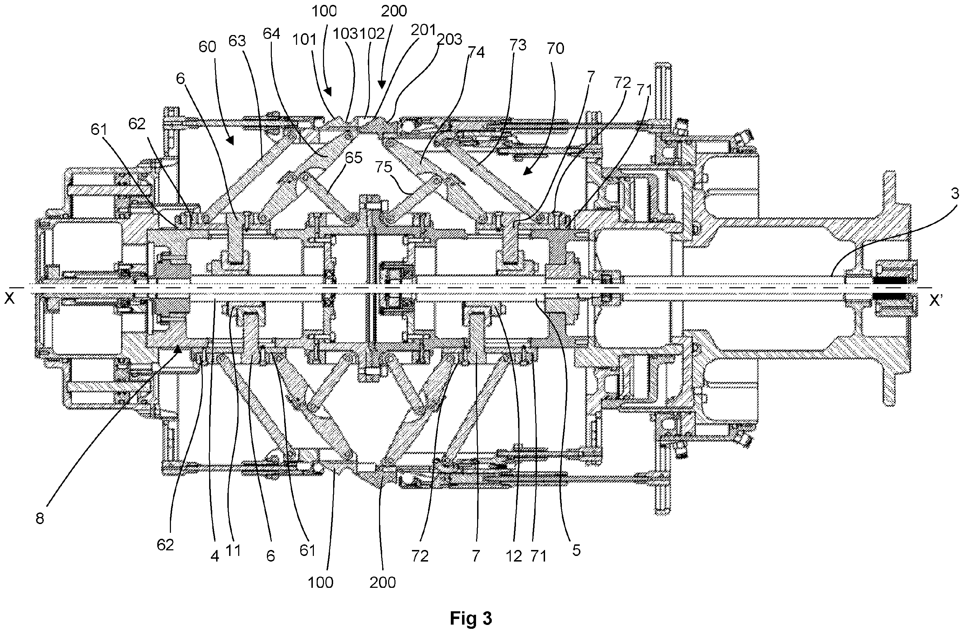

Les segments 100 du premier ensemble de segments 10 sont tous identiques entre eux. Ils sont, dans le présent exemple au nombre de 27, mais ce nombre peut varier. Dans cet exemple, chaque segment est rigide et formé d'une seule pièce présentant une forme générale allongée dont la plus grande dimension est parallèle à l'axe X-X'. Tel que mieux visible en coupe (fig. 3), un segment 100 comporte une partie avant 101 de forme générale inclinée ou sous forme d'une portion de cône prolongée par une partie arrière 102 de forme générale de portion de cylindre. La partie avant 101 présente une gorge circulaire 103 destinée à recevoir une tringle 500. La gorge 103 est coaxiale à l'axe X-X' et présente une section radiale en demi-cercle. La partie arrière 102 est réalisée en forme de peigne, en l'espèce, comportant deux dents 104, 105 (fig. 2). Cette partie en forme de peigne permet d'assurer une continuité en direction axiale de la face externe entre les segments du premier ensemble 10 et ceux du deuxième ensemble 20. Chaque segment 100 est fixé à un support 110 rigide par lequel il est relié à des moyens d'entraînement et de guidage du tambour.

Les segments 200 du deuxième ensemble de segments 20 sont tous identiques entre eux. Ils sont, comme les segments 100, au nombre de 27 dans cet exemple, mais leur nombre peut également varier. Chaque segment 200 est rigide et formé d'une seule pièce présentant une forme générale allongée dont la plus grande dimension est parallèle à l'axe X-X'. Tel que mieux visible en coupe (fig. 3), un segment 200 comporte une partie avant 201 de forme générale inclinée ou sous forme d'une portion de cône prolongée par une partie arrière comportant une gorge circulaire 203 coaxiale à l'axe X-X' et présente une section radiale en demi-cercle. La partie avant 201 est réalisée en forme de peigne, comportant dans cet exemple trois dents 204, 205, 206 qui s'interpénètrent avec les dents 104, 105 d'un segment 100 adjacent. Chaque segment 200 est fixé à un support 210 rigide par lequel il est relié à des moyens d'entraînement et de guidage du tambour.

La figure 3 est une vue en coupe axiale du tambour 1, illustré en position rétractée dans la partie supérieure et en position expansée dans la partie inférieure de la figure, et permet de visualiser en détail les principaux éléments du tambour, notamment ceux qui assurent l'entraînement et le guidage des segments 100, 200. Le tambour 1 comprend un support central ou fût 8 coaxial à un arbre 3 d'axe X-X' qui le traverse. Le fût 8 est en deux parties 8a, 8b qui sont assemblées par une fixation à vis. L'arbre 3 est entraîné en rotation à l'une de ses extrémités par un moteur (non représenté) et entraîne à son tour en rotation deux vis sans fin 4, 5 situées au centre du tambour. Dans l'exemple décrit, les vis sans fin 4, 5 ont un même diamètre nominal, et un même pas, mais l'une est filetée à droite et l'autre à gauche. Chaque vis sans fin 4, 5 est destinée à entraîner, moyennant un écrou 11, 12 monté sur la vis, une tige radiale 6, 7 en un déplacement axial. Cet agencement des vis et écrous assure un déplacement symétrique des tiges de part et d'autre du plan médian vertical du tambour. Chaque tige 6, 7 est rigidement fixée à un manchon 61, 71 monté à possibilité de coulissement sur le fut 8. Le manchon 61, 71 est relié à un support 110, 210 de segment 100, 200 par un mécanisme 60, 70 à biellettes articulées. Un secteur 100, 200 est rigidement fixé au support de segment 110, 210 de sorte que la position de ce dernier détermine entièrement la position du segment.

Plus particulièrement en référence à la fig. 3, le tambour comporte, pour chaque segment 100 un support de biellettes 62 ainsi que deux biellettes rectilignes, 63, 64 parallèles entre elles et ayant une même longueur, chacune articulée directement au support de biellettes 62 et au support 110 du segment 100. Il en est de même pour chaque segment 200, un support de biellettes 72 étant prévu sur le tambour 1, ainsi que deux biellettes 73, 74 rectilignes, parallèles entre elles et ayant une même longueur, chacune articulée directement au support de biellettes 72 et au support 210 du segment 200. Le tambour comporte, de plus, une biellette d'opposition 65, respectivement 75 montée articulée directement au centre de chaque biellette interne 64, respectivement 74, et à un support 66, 76 qui est, lui, fixé rigidement sur le fût 8. Les deux biellettes parallèles et la biellette en opposition forment un mécanisme à biellettes articulées 60, 70. Ces mécanismes à biellettes articulées 60, 70 sont donc également en l'espèce au nombre de 27. Tous les axes d'articulation des biellettes sont parallèles entre eux et s'étendent dans une direction orthogonale à l'axe X-X' et non sécant avec ce dernier. Les axes d'articulation des biellettes d'opposition 65, 75 au support de biellette 66, 76 et à la biellette interne 64, 74 s'étendent dans un même plan perpendiculaire à l'axe X-X'. Il en est de même pour les autres axes d'articulation des biellettes 63, 64 et 73, 74 respectivement au support 62, 72 et au support de secteur 110, 210. Et ces propriétés se conservent quelle que soit la configuration du tambour c'est-à-dire quelle que soit la position des segments déterminée par les moyens d'expansion. En fonctionnement, lorsque la tige 6, 7 est entraînée en translation axiale, elle entraîne via le manchon 61, 71 les mécanismes à biellettes articulées 60, 70 qui confèrent un mouvement uniquement radial aux segments 100, 200. Les vis 4, 5 et les écrous 11, 12 ainsi que les mécanismes à biellettes articulées 60, 70 forment des moyens d'expansion-rétraction du tambour.

On va maintenant expliquer, en référence à la figure 4 (dans laquelle les éléments de la partie inférieure du tambour n'ont pas été représentés pour plus de clarté), comment on réalise l'entraînement en rotation des vis sans fin 4 et 5. L'arbre 3 est entraîné en rotation à son extrémité située à droite du tambour 1. L'arbre 3 entraîne ensuite directement en rotation la vis 5 en étant couplé à une extrémité d'entrée de celle-ci. La vis 5 comporte un pignon 21 à son extrémité de sortie qui vient directement en prise avec un pignon 22 porté par un arbre secondaire 23 qui est parallèle à l'arbre central 3. Les pignons 21 et 22 forment un engrenage droit et ont un rapport de transmission de 1 et leur rôle est d'inverser le sens de rotation entre l'arbre central 3 (ou la vis 5) et l'arbre secondaire 23. L'arbre secondaire 23 est directement couplé à un premier arbre de transmission 24 qui porte un pignon 25 destiné à s'engrener directement avec un pignon 26 d'un deuxième arbre de transmission 27 d'axe parallèle à celui du premier arbre de transmission 24. Les pignons 25 et 26 sont cylindriques à denture droite et forment un train réducteur dont le rapport de transmission est compris entre 0.45 et 0.7. Le deuxième arbre de transmission 27 est directement couplé à la vis 4 à laquelle il transmet son mouvement de rotation. La vis 4 et le deuxième arbre de transmission 27 ont comme axe de rotation l'axe X-X'. Les différents arbres sont montés sur des paliers de rotation ou roulements supportés au sein du fût 8.

Avantageusement, les pignons 25, 26 sont montés à l'extrémité des arbres 24, 27 de manière à pouvoir être démontés et remplacés facilement et de pouvoir ainsi modifier la valeur du rapport de transmission du train réducteur. L'un des pignons 25, 26 comprend de plus des moyens de synchronisation (à l'aide de cannelures ou d'un manchon de frettage) par rapport à son arbre d'entraînement. Ceci permet de changer la vitesse et donc la valeur du déplacement radial d'un ensemble de segments par rapport à l'autre à partir d'un diamètre donné du tambour dans la première position de travail, diamètre qui est donc variable.

.En fonctionnement, lorsqu'on entraîne en rotation l'arbre central 3, la vis 5 tourne dans un même sens et à la même vitesse que l'arbre 3, alors que la vis 4 tourne dans un même sens, mais à une vitesse inférieure à celle de l'arbre 3. Ceci a pour effet un déplacement radial plus important des segments 200 du deuxième ensemble 20 par rapport aux segments 100 du premier ensemble 10. La partie avant 201 des segments 200 a une forme conique et est réalisée sous forme de peigne et, de ce fait, elle assure une continuité en direction axiale de la face externe du tambour en position expansée du tambour. Ainsi, lorsqu'une expansion radiale différente a lieu entre les deux ensembles des segments, la face externe cylindrique en position rétractée du tambour qui a permis la pose des différents composants « à plat » (tel que visible en partie supérieure de la fig. 3) devient conique en position expansée du tambour (tel que visible en partie inférieure de la fig.3), ce qui permet de réaliser la finition de l'assemblage, tel qu'il sera expliqué par la suite.

Le tambour comprend également, pour chaque segment 100, 200, deux dispositifs de retroussage 30, 40 situés chacun à une extrémité du tambour et qui sont reliés chacun à un ensemble de segments de manière à ce qu'ils puissent se déplacer radialement en même temps que ces derniers.

Le premier dispositif de retroussage 30 est situé en partie gauche du tambour, il comprend une tige 31 agencée, en position rétractée, parallèlement à l'axe X-X' et qui est directement reliée, à son extrémité droite, à un crochet 32 qui est attaché à un ressort de retroussage 33 monté légèrement en tension sur le tambour 1. La tige 31 est montée à possibilité de pivotement autour d'un axe parallèle à celui des articulations des biellettes de l'ensemble 60, sur le support 110 d'un secteur 100. Tel que mieux visible à la figure 7, la tige 31 comporte une pièce d'extrémité formant un tampon 34 munie de broches 32' agencées dans une direction perpendiculaire à celle de l'axe longitudinal de la tige 31, les broches 32' étant montées à possibilité de pivotement dans des orifices correspondants réalisés à la périphérie d'un plateau d'extrémité 38 du tambour.

Le tampon 34 est rigidement fixé sur la tige 31 et est muni d'une ailette 35 d'extrémité. L'ailette 35 est montée à possibilité de coulissement radial dans une rainure de guidage 36 réalisée dans un flasque latéral gauche 37 du tambour 1, tout en étant bloquée axialement dans cette rainure. Le plateau mobile 38 et le flasque 37 s'étendent dans un plan perpendiculaire à l'axe X-X' et sont centrés sur ce dernier.

Le tambour comprend un premier vérin annulaire 39, par exemple un vérin pneumatique qui sert de moyen d'actionnement en translation axiale du dispositif de retroussage 30. Le boîtier du vérin 39 est agencé de manière étanche et à possibilité de coulissement axial le long d'une partie tubulaire 28 fixe du tambour 1. Plus particulièrement et en référence à la figure 4, la partie tubulaire 28 est montée sur le fût 8 et de manière concentrique à l'axe X-X'. Le vérin annulaire 39 comprend un piston annulaire 39' monté fixe sur la partie tubulaire 28 et une tige de blocage en rotation 39" qui traverse de manière étanche le piston 39'. Le boîtier du vérin 39 est solidaire du flasque 37 et du plateau 38. Lorsque la chambre interne du vérin 39 est alimentée en gaz sous pression, le boîtier du vérin 39, le flasque 37 et le plateau 39 se déplacent simultanément en translation axiale.

Lorsqu'elle reçoit le mouvement de poussée en translation axiale du vérin 39, la tige 31 se déplace vers la droite sur la fig. 4 et pousse le ressort 33 sur la pente de la partie avant 101 d'un segment 100 pour réaliser le retroussage des nappes autour de la tringle posée dans la gorge 103. A la fin du retroussage, le vérin 39 est commandé en sens inverse et la tige 31 se retire dans sa position initiale ou de repos. Les dispositifs de retroussage 30 sont en l'occurrence au nombre de 27.

Le deuxième dispositif de retroussage 40 est situé en partie droite du tambour, il comprend une tige 41 agencée parallèlement à l'axe X-X' et qui est directement reliée, à son extrémité gauche, à un crochet 42 qui est destiné à venir en prise avec un ressort de retroussage 43, en étant attaché à ce dernier. L'extrémité droite de la tige 41 comporte un tampon 44, rigidement fixé sur la tige 41, et muni d'une ailette 45 d'extrémité.

L'ailette 45 est montée à possibilité de coulissement radial dans une rainure de guidage 46 réalisée dans un flasque latéral droit 47 du tambour 1, tout en étant bloquée axialement dans cette rainure. Le flasque latéral droit 47 s'étend dans un plan perpendiculaire à l'axe X-X' et est centré sur ce dernier.

Le tambour comprend un deuxième vérin annulaire 49, par exemple un vérin pneumatique qui forme un premier moyen d'actionnement en translation axiale du dispositif de retroussage 40. Le boîtier du vérin 49 est agencé de manière étanche et à possibilité de coulissement axial le long d'une partie tubulaire 48 fixe du tambour 1. Plus particulièrement et en référence à la figure 4, la partie tubulaire 48 est montée sur le fût 8 et de manière concentrique à l'axe X-X', moyennant deux pièces tubulaires 57 et 58 concentriques à l'axe X-X' et rigidement fixées sur ce dernier. Le vérin annulaire 49 comprend un piston annulaire 49' monté fixe sur la partie tubulaire 48 et une tige de blocage en rotation (non visible sur les dessins) qui traverse de manière étanche le piston 49'. Le boîtier du vérin 49 est solidaire du flasque 47. Lorsque la chambre interne du vérin 49 est alimentée en gaz sous pression, le boîtier du vérin 49 et le flasque 37 se déplacent simultanément en translation axiale.

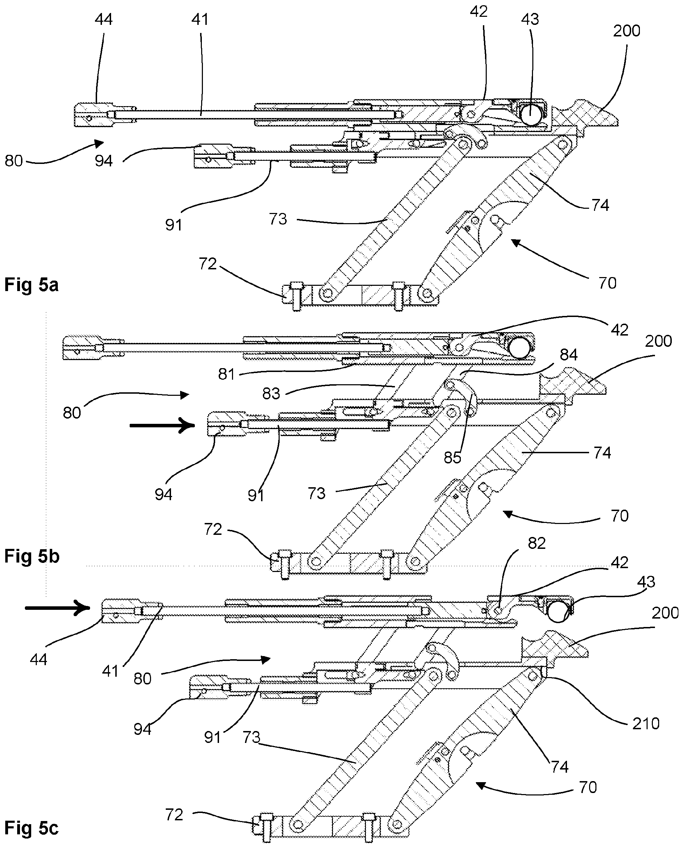

Tel que mieux visible aux figures 5a à 5c, le crochet 42 et la tige 41 sont montés sur un support 81 qui est, lui, monté moyennant un dispositif à biellettes articulées 80 sur le support 210 d'un secteur 200. La tige 41 est rigidement fixée au support 81, alors que le crochet 42 est monté à possibilité de pivotement autour d'un axe 82 qui s'étend dans une direction orthogonale à l'axe X-X'. Le mécanisme à biellettes articulées 80 comprend deux biellettes rectilignes 83, 84 parallèles entre elles et qui ont une même longueur, chacune articulée directement au support de biellettes 81 et au support 210 du segment 200. Le mécanisme à biellettes articulées 80 comporte, de plus, une biellette d'opposition 85 montée articulée directement au centre de la biellette 84 et au support 210. Ces mécanismes à biellettes articulées 80, sont donc également en l'espèce au nombre de 27. Tous les axes d'articulation des biellettes de ce mécanisme sont parallèles entre eux et s'étendent dans une direction orthogonale à l'axe X-X' et non sécant avec ce dernier. Les dispositifs de retroussage 40 sont en l'occurrence au nombre de 27. Le mécanisme à biellettes articulées 80 est actionné par une tige de poussée 91 actionnée en un mouvement axial dans le sens de la flèche de la figure 5b par l'action d'un troisième vérin annulaire 59, qui est dans l'exemple décrit, un vérin pneumatique. L'extrémité droite de la tige 91 comporte un tampon 94, rigidement fixé sur la tige 91, et muni d'une ailette 95 d'extrémité qui est montée à coulissement radial dans une rainure de guidage 96 réalisée dans un flasque 97, tout en étant bloquée axialement dans cette rainure.

Le troisième vérin annulaire 59 forme un deuxième moyen d'actionnement en translation axiale du dispositif de retroussage 40. Le boîtier du vérin 59 est agencé de manière étanche et à possibilité de coulissement axial le long d'une partie tubulaire 58 fixe du tambour 1. Plus particulièrement et en référence à la figure 4, la partie tubulaire 58 est rigidement fixée sur le fût 8 et de manière concentrique à l'axe X-X'. Le vérin annulaire 59 comprend un piston annulaire 59' monté fixe sur la partie tubulaire 58 et une tige de blocage en rotation (non visible sur les dessins) qui traverse de manière étanche le piston 59'. Le boîtier du vérin 59 est solidaire du flasque 97 et d'un plateau 98. Lorsque la chambre interne du vérin 49 est alimentée en gaz sous pression, le boîtier du vérin 59, le flasque 97 et le plateau 98 se déplacent simultanément en translation axiale.

On va décrire maintenant, en référence aux figures 5a à 5c, le fonctionnement du deuxième dispositif de retroussage 40. Le dispositif est illustré en partie droite par rapport à sa position au sein du tambour 1 dans les figures précédentes mais son fonctionnement est le même dans toutes les positions. Le dispositif est représenté en position repliée à la figure 5a, c'est-à-dire qu'il se trouve en position escamotée en dessous de la face externe des segments 200. Une fois les nappes et tringles posées sur le tambour, le dispositif de retroussage 40 est actionné pour relever les bords des nappes et pour ceci il prend la position de la figure 5b. Plus particulièrement la tige 91 est actionnée en translation axiale par l'action du vérin 59, comme indiqué par le flèche dans cette figure, ce qui provoque le pivotement des biellettes du mécanisme à biellettes articulées 80 et donc le déplacement radial du crochet 42. Une fois les nappes relevées, on doit procéder au retroussage des nappes autour de la tringle posée dans la gorge 203. Pour ceci, le dispositif de retroussage 40 prend la position illustrée à la figure 5c dans laquelle le crochet 42, qui est en position relevée, est poussé en translation axiale par la tige 41 sous l'action du vérin 49. Dans cette position les nappes sont retroussées autour de la tringle à l'aide du ressort 43 tenu par le crochet 42, crochet qui pivote autour de l'articulation 82 et permet au ressort de suivre la pente descendante du segment 200. A la fin du retroussage, on actionne le dispositif 40 pour effectuer les mêmes mouvements en sens contraire jusqu'à retrouver sa position de repos.

Les segments 100 et 200 sont situés l'un dans le prolongement de l'autre avec une distance entre les gorges 103 et 203 d'environ 55mm. Le tambour est de préférence recouvert sur toute sa longueur d'un manchon élastique qui permet de couvrir les espaces en direction axiale et circonférentielle qui existent entre les segments en position étendue du tambour.

Le réglage du diamètre du tambour dans sa position rétractée permet d'utiliser un même tambour pour deux diamètres différents de siège de bourrelet, par exemple pour des adaptateurs dont le rapport des dimensions entre les deux sièges est : 17/16 et 18/17 ou pour 20/19 et 21/20. Le réglage du diamètre peut se faire par exemple en découplant la transmission de la vis 4 du train réducteur ou en retirant les pignons du train réducteur.

Le réglage de la distance entre les sièges de bourrelet de l'adaptateur revient à régler la distance entre les gorges 103 et 203 des segments qui se fait en utilisant une entretoise intermédiaire 29 qui est rigidement fixée sur le fut central 8, au centre de celui-ci en étant prise en sandwich entre les parties 8a et 8b. L'agencement de l'entretoise entre les segments 100 et 200 permet de varier la distance entre les gorges 103 et 203 des segments, ces derniers restant en prise les uns avec les autres moyennant leurs extrémités en forme de peigne.

Les pièces du tambour sont réalisées pour la plupart en métal, par exemple certaines en aluminium et d'autres en acier. Dans une variante, on peut réaliser les parties supérieures ou de contact avec les nappes de caoutchouc des segments 100 et 200 par une technique d'impression 3D (à base d'une résine ou d'une poudre métallique), pour plus de flexibilité.

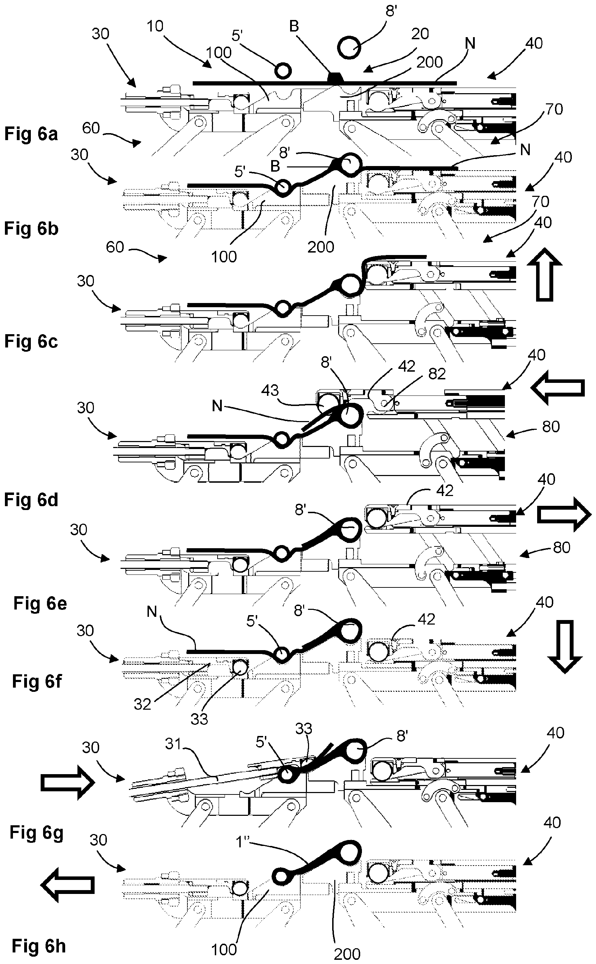

Ce tambour sert à la réalisation d'une ébauche crue d'adaptateur pour pneumatique. On va décrire maintenant, en référence aux figures 6a à 6h, un procédé d'assemblage d'adaptateur utilisant le tambour.

La figure 6a illustre le tambour en position rétractée, on comprend la position dans laquelle la face externe 50 du tambour est cylindrique. Les segments 100 et 200 ont leurs faces externes au même niveau, ce qui permet la pose des produits « à plat ». Ainsi, on commence par poser les différentes nappes N illustrées de manière schématique sur la figure (par différentes nappes on comprend au moins une nappe de protection et une nappe carcasse munie de fils de renfort), ensuite le bourrage tringle B en les assemblant pendant que le tambour 1 est en rotation autour de l'axe X-X'. Sont ensuite positionnées la petite tringle 5' et la grande tringle 8', en regard des gorges 103 et 203.

Après avoir posé tous les composants sur le tambour, on commande l'expansion de celui-ci pour arriver dans la configuration étendue illustrée à la figure 6b. Pour arriver à cette configuration, on met en rotation l'arbre central 3 et l'on obtient, pour tous les segments simultanément, l'expansion radiale mais dissymétrique par rapport à un plan médian vertical passant au niveau de la jonction des deux ensembles de segments. Ainsi, les segments 100 du premier ensemble 10 se trouvent à un diamètre moindre que celui des segments 200 du deuxième ensemble 20 en position expansée du tambour 1, du fait de l'entraînement en rotation à des vitesses différentes de leurs vis 4, 5. Lors de l'expansion du tambour, de par l'épaisseur plus importante des nappes au voisinage de la petite tringle 5', celle-ci est la première à être immobilisée dans la gorge 103 des segments 100, ce qui permet de contrôler le glissement des nappes sur la partie conique du tambour expansé A la fin de l'expansion, les deux tringles 5' et 8' sont serrées, avec les composants caoutchoutiques dans les gorges 103, 203 des segments 100, 200 du tambour, les dispositifs de retroussage 30, 40 étant toujours escamotés sous les composants.

La figure 6c illustre le début du retroussage du côté droit de l'ébauche à l'aide du deuxième dispositif de retroussage 40. Le crochet 42 du dispositif reçoit un actionnement en un mouvement radial de translation en provenance du vérin 59. Le crochet se déplace vers le haut dans le sens de la flèche, ce qui permet de relever les bords des composants au-dessus de la tringle 8'.

La figure 6d illustre la suite du retroussage du côté droit de l'ébauche à l'aide du deuxième dispositif de retroussage 40. Le crochet 42 du dispositif reçoit un actionnement en un mouvement axial de translation en provenance du vérin 49. Le crochet 42 se déplace vers la gauche dans le sens de la flèche, ce qui permet de aux bords des composants de passer au-dessus de la tringle 8'. En même temps, le crochet 42 tourne autour de son axe de pivotement 82, ce qui permet à l'extrémité du crochet d'amener le ressort 43 en un mouvement descendant sur la pente 201 des segments 200. Le ressort 43, qui est monté légèrement en tension dans la position rétractée du tambour, permet ainsi d'exercer la pression nécessaire sur les bords repliés des composants afin d'assurer leur adhésion avec ceux de la partie centrale de l'ébauche de l'adaptateur et de chasser l'air.

Les figures 6e et 6f illustrent les mouvements de retrait du dispositif 40 en réalisant d'abord un retrait en direction axiale et ensuite en direction radiale du dispositif de retroussage 40 qui sont obtenus en actionnant en sens contraire de celui du déploiement des vérins 49 et 59. Le dispositif se retrouve replié en position escamotée à la figure 6f. Une étape supplémentaire de rouletage des bords repliés des produits à partir de l'extérieur et en allant vers le centre de l'ébauche est effectuée après le retrait du dispositif 40.

La figure 6g illustre le début du retroussage du côté gauche de l'ébauche à l'aide du premier dispositif de retroussage 30. Le crochet 32 du dispositif reçoit un actionnement en un mouvement axial de translation en provenance du vérin 39. Le crochet se déplace vers la droite dans le sens de la flèche, ce qui permet de relever les bords des composants au-dessus de la tringle 5'. Lorsque l'on pousse la tige 31, le crochet 32 pivote autour de l'articulation 32', ce qui lui permet de monter la pente 101 du segment 100 en poussant les bords des nappes en caoutchouc qui passent ainsi au-dessus de la tringle 5'. Le crochet 32 entraîne en mouvement le ressort 33 qui exerce la pression nécessaire sur les bords repliés des composants afin d'assurer leur adhésion avec ceux de la partie centrale de l'ébauche de l'adaptateur et de chasser l'air.

La figure 6h illustre la position et, par la flèche, le mouvement de retrait du dispositif 30 en position escamotée. Le retrait en direction axiale du dispositif de retroussage 30 est obtenu par actionnement en sens contraire de celui du déploiement du vérin 39. Une étape supplémentaire de rouletage des bords repliés des produits en partant de l'extérieur et en allant vers le centre de l'ébauche 1" est effectuée après le retrait du dispositif 30.

Après avoir ramené les deux dispositifs de retroussage en position escamotée sous les segments, on actionne en sens contraire l'arbre central 3 et on ramène le tambour en en configuration rétractée afin d'extraire l'ébauche 1". L'ébauche crue ainsi obtenue est ensuite vulcanisée dans un moule.

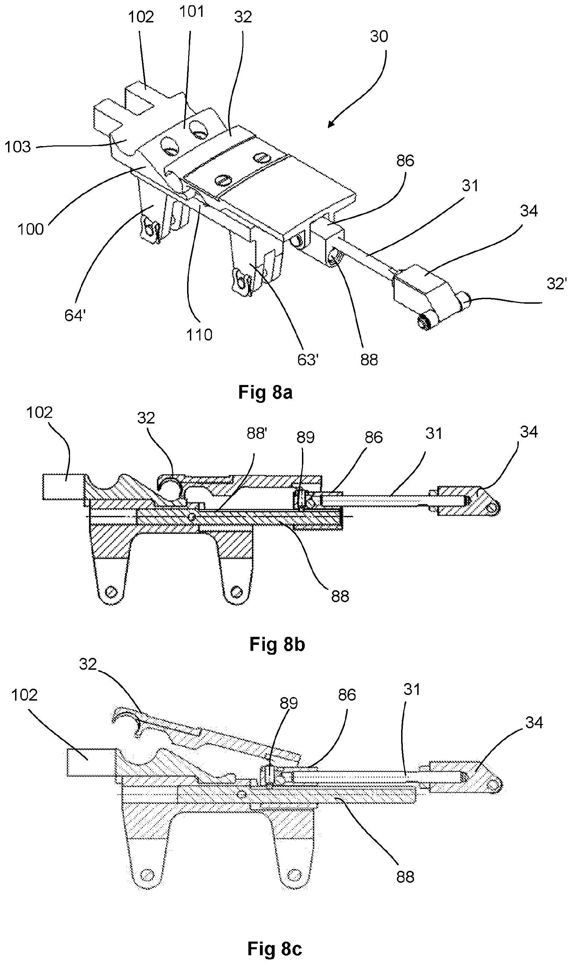

La figure 8a illustre, par une vue en perspective, une autre forme de réalisation du dispositif de retroussage 30 de la figure 7. Les figures 8b et 8c sont des vues en coupe longitudinale du dispositif de retroussage de la fig. 8a illustré dans deux positions de fonctionnement, notamment en position de repos à la fig. 8b et en position active de retroussage à la fig. 8c. Le dispositif de retroussage 30 selon cette variante permet de dissocier la liaison pivot nécessaire au suivi de la forme conique de la partie avant 101 du secteur 100 de la liaison glissière nécessaire à l'avancée en direction axiale du dispositif de retroussage 30. Pour ceci, on place à l'arrière du support 110 des segments 100 une tige 88 de guidage en translation axiale, la tige comportant une rainure longitudinale 88' sur laquelle vient translater un coulisseau 86, maintenu en translation grâce à une vis à téton 89 qui demeure dans la rainure longitudinale 88'. Ce coulisseau 86 porte un axe 87 de direction perpendiculaire à l'axe du tambour, axe 87 qui forme une liaison pivot sur laquelle s'articule le crochet 32. Pour ceci, le crochet 32 a été modifié pour comporter un montage pivotant autour de l'axe 87. Ainsi, dans cette variante de réalisation du dispositif de retroussage, seul le crochet 32 pivote autour de l'axe 87 pendant l'opération de retroussage, tandis que la tige de poussée 31 reste parallèle à l'axe du tambour dans son mouvement de translation axiale.

Le dispositif de retroussage 30 illustré aux figures 8a à 8c est monté au sein du tambour 1 d'assemblage de l'invention en lieu et place du dispositif 30 de la fig. 7. Pour ceci, il comporte des brides 63' et 64' de liaison aux biellettes 63, respectivement 64 ainsi qu'un tampon 34 le reliant au flasque 37 et donc au vérin 39. Le dispositif de retroussage 30 selon cette variante permet de conserver un déplacement uniquement axial de la tige de poussée 31 lors du retroussage ce qui permet d'éviter de générer un moment de flexion qui serait induit par un déplacement en biais de la tige du dispositif de retroussage de la fig. 7. Ainsi, il a été constaté que, dans certains cas, un tel déplacement en biais pourrait générer un arc-boutement du tampon 34 dans le plateau 36, voire une déformation des tiges de poussée 31.

On pourra utiliser des vérins individuels d'actionnement des dispositifs de retroussage à la place des vérins annulaires.

## Revendications

1. Tambour (1) d'assemblage expansible radialement destiné à la fabrication d'un adaptateur de pneumatique sur une jante comprenant un bourrelet (2') intérieur et un bourrelet extérieur reliés par une armature (3'), ledit tambour comportant un arbre (3) central, un premier ensemble (10) de segments (100) et un deuxième ensemble (20) de segments (200), tous les segments étant disposés circonférentiellement autour de l'arbre (3) pour former une face externe (50) de forme généralement cylindrique du tambour, caractérisé en ce les segments (100) du premier ensemble (10) et les segments (200) du deuxième ensemble (20) se font face axialement et en ce que ledit tambour (1) est agencé pour permettre une expansion radiale différente des segments du premier ensemble (10) par rapport aux segments du deuxième ensemble (20) de segments entre deux positions de travail.

2. Tambour selon la revendication 1, **caractérisé en ce que** la face externe de chaque segment (100, 200) comporte une gorge (103, 203) de réception de tringle.

3. Tambour selon l'une des revendications 1 ou 2, **caractérisé en ce qu'**il comporte des moyens de déplacement des segments entre une première position de travail dans laquelle les segments du premier (10) et du deuxième ensemble (20) sont en position rétractée et la face externe (50) du tambour est de forme sensiblement cylindrique et a un même diamètre sur sa longueur et une deuxième position de travail dans laquelle les segments sont en position expansée de manière à ce que les segments du deuxième ensemble (20) présentent un diamètre supérieur aux segments du premier ensemble (10) et la face externe (50) comporte deux parties (51, 52) de forme sensiblement cylindrique de diamètres différents.

4. Tambour selon l'une des revendications précédentes, **caractérisé en ce que** la face axialement interne des segments (100) du premier ensemble (10) comporte des dents qui s'interpénètrent axialement avec les dents de la face axialement externe des segments (200) du deuxième ensemble (20).

5. Tambour selon l'une des revendications précédentes, **caractérisé en ce qu'**il comprend un seul moyen d'entrainement en déplacement des deux ensembles de segments (10, 20) simultanément.

6. Tambour selon l'une des revendications 1 à 5, **caractérisé en ce qu'**il comprend un moyen d'entrainement en déplacement des deux ensembles de segments (10, 20) agencé pour déplacer les deux ensembles de segments (10, 20) à des vitesses différentes, l'un par rapport à l'autre.

7. Tambour selon la revendication 6, **caractérisé en ce que** chaque ensemble de segments (10, 20) est déplacé en translation radiale à l'aide d'un dispositif à vis (4,5) et écrou (6,7) et que chaque vis reçoit le mouvement de rotation dudit arbre central.

8. Tambour selon la revendication 7, **caractérisé en ce que** l'une des vis (5) du dispositif reçoit le mouvement de rotation dudit arbre central (3) moyennant un train de pignons à rapport réducteur.

9. Tambour selon la revendication 8, **caractérisé en ce que** les pignons dudit train sont interchangeables et sont montés à possibilité de synchronisation en toute position relative.

10. Tambour selon l'une des revendications 7 à 9, **caractérisé en ce que** chaque ensemble de segments (10, 20) du tambour est relié au dispositif à vis (4,5) et écrou (6,7) par un mécanisme à biellettes articulées (60,70).

11. Tambour selon l'une des revendications précédentes, **caractérisé en ce qu'**il comporte un manchon flexible agencé pour recouvrir sa face externe.

12. Tambour selon l'une des revendications précédentes, **caractérisé en ce qu'**il comporte des dispositifs de retroussage (30, 40) situé chacun à une extrémité du tambour et expansible radialement en même temps qu'un ensemble de segments.

13. Tambour selon la revendication 12, **caractérisé en ce que** lesdits dispositifs de retroussage (30,40) sont escamotables sous la face externe (50) du tambour (1).

14. Procédé d'assemblage pour la fabrication d'un adaptateur de pneumatique sur une jante comprenant un bourrelet (2') intérieur et un bourrelet extérieur reliés par une armature (3'), comportant les étapes suivantes :
- poser les composants caoutchouteux sur une surface cylindrique d'un tambour selon la revendication 1;
- poser deux tringles sur les composants caoutchouteux dans des gorges prévues à cet effet dans chaque ensemble de segments ;
- réaliser une expansion radiale différente des segments du premier ensemble (10) par rapport aux segments du deuxième ensemble (20) de segments entre deux positions de travail, pour serrer les tringles à l'intérieur des composants caoutchouteux.

15. Procédé selon la revendication 14, **caractérisé en ce qu'**on réalise le serrage de la tringle ayant le plus petit diamètre dans une gorge prévue à cet effet dans le premier ensemble de segments avant de réaliser le serrage de la tringle de plus grand diamètre.

## Patentansprüche

1. Radial expandierbare Aufbautrommel (1), die zur Herstellung eines Luftreifenadapters auf einer Felge bestimmt ist, der einen inneren Wulst (2') und einen äußeren Wulst enthält, die durch eine Bewehrung (3') verbunden sind, wobei die Trommel eine Zentralachse (3), eine erste Einheit (10) von Segmenten (100) und eine zweite Einheit (20) von Segmenten (200) aufweist, wobei alle Segmente in Umfangsrichtung um die Achse (3) angeordnet sind, um eine Außenseite (50) allgemein zylindrischer Form der Trommel zu bilden, **dadurch gekennzeichnet, dass** die Segmente (100) der ersten Einheit (10) und die Segmente (200) der zweiten Einheit (20) einander axial gegenüberliegen, und dass die Trommel (1) eingerichtet ist, um eine unterschiedliche radiale Expansion der Segmente der ersten Einheit (10) bezüglich der Segmente der zweiten Einheit (20) von Segmenten zwischen zwei Arbeitsstellungen zu erlauben.

2. Trommel nach Anspruch 1, **dadurch gekennzeichnet, dass** die Außenseite jedes Segments (100, 200) eine Rille (103, 203) zur Aufnahme eines Wulstkerns aufweist.

3. Trommel nach einem der Ansprüche 1 oder 2, **dadurch gekennzeichnet, dass** sie Einrichtungen zur Verschiebung der Segmente zwischen einer ersten Arbeitsstellung, in der die Segmente der ersten (10) und der zweiten Einheit (20) in zurückgezogener Stellung sind und die Außenseite (50) der Trommel eine im Wesentlichen zylindrische Form und über ihre Länge den gleichen Durchmesser hat, und einer zweiten Arbeitsstellung aufweist, in der die Segmente in expandierter Stellung sind, so dass die Segmente der zweiten Einheit (20) einen größeren Durchmesser als die Segmente der ersten Einheit (10) haben und die Außenseite (50) zwei Teile (51, 52) von im Wesentlichen zylindrischer Form mit unterschiedlichen Durchmessern aufweist.

4. Trommel nach einem der vorhergehenden Ansprüche, **dadurch gekennzeichnet, dass** die axial innere Seite der Segmente (100) der ersten Einheit (10) Zähne aufweist, die axial mit den Zähnen der axial äußeren Seite der Segmente (200) der zweiten Einheit (20) ineinandergreifen.

5. Trommel nach einem der vorhergehenden Ansprüche, **dadurch gekennzeichnet, dass** sie eine einzige Antriebseinheit zur gleichzeitigen Verschiebung der zwei Einheiten von Segmenten (10, 20) enthält.

6. Trommel nach einem der Ansprüche 1 bis 5, **dadurch gekennzeichnet, dass** sie eine Verschiebeantriebseinrichtung der zwei Einheiten von Segmenten (10, 20) enthält, die eingerichtet ist, um die zwei Einheiten von Segmenten (10, 20) mit unterschiedlichen Geschwindigkeiten zueinander zu verschieben.

7. Trommel nach Anspruch 6, **dadurch gekennzeichnet, dass** jede Einheit von Segmenten (10, 20) mit Hilfe einer Vorrichtung mit Schraube (4, 5) und Mutter (6, 7) in radialer Translationsrichtung verschoben wird, und dass jede Schraube die Drehbewegung von der Zentralachse empfängt.

8. Trommel nach Anspruch 7, **dadurch gekennzeichnet, dass** eine der Schrauben (5) der Vorrichtung die Drehbewegung von der Zentralachse (3) mittels eines Ritzelgetriebes mit Untersetzungsverhältnis empfängt.

9. Trommel nach Anspruch 8, **dadurch gekennzeichnet, dass** die Ritzel des Getriebes austauschbar und mit der Möglichkeit der Synchronisierung in jeder relativen Stellung montiert sind.

10. Trommel nach einem der Ansprüche 7 bis 9, **dadurch gekennzeichnet, dass** jede Einheit von Segmenten (10, 20) der Trommel mit der Vorrichtung mit Schraube (4, 5) und Mutter (6, 7) durch einen Mechanismus mit angelenkten Schubstangen (60, 70) verbunden ist.

11. Trommel nach einem der vorhergehenden Ansprüche, **dadurch gekennzeichnet, dass** sie eine flexible Muffe aufweist, die eingerichtet ist, um ihre Außenseite zu bedecken.

12. Trommel nach einem der vorhergehenden Ansprüche, **dadurch gekennzeichnet, dass** sie Umkrempelvorrichtungen (30, 40) aufweist, die sich je an einem Ende der Trommel befinden und radial gleichzeitig mit einer Einheit von Segmenten expandierbar sind.

13. Trommel nach Anspruch 12, **dadurch gekennzeichnet, dass** die Umkrempelvorrichtungen (30, 40) unter die Außenseite (50) der Trommel (1) einziehbar sind.

14. Montageverfahren für die Herstellung eines Reifenadapters auf einer Felge, der einen inneren Wulst (2') und einen äußeren Wulst enthält, die durch eine Bewehrung (3') verbunden sind, das die folgenden Schritte aufweist:
- Anbringen der Kautschukbauteile auf einer zylindrischen Fläche einer Trommel nach Anspruch 1;
- Anbringen von zwei Wulstkernen auf den Kautschukbauteilen in zu diesem Zweck in jeder Einheit von Segmenten vorgesehenen Rillen;
- Herstellen einer anderen radialen Expansion der Segmente der ersten Einheit (10) bezüglich der Segmente der zweiten Einheit (20) von Segmenten zwischen zwei Arbeitsstellungen, um die Wulstkerne innerhalb der Kautschukbauteile einzuklemmen.

15. Verfahren nach Anspruch 14, **dadurch gekennzeichnet, dass** das Klemmen des Wulstkerns mit dem kleinsten Durchmesser in eine zu diesem Zweck in der ersten Einheit von Segmenten vorgesehenen Rille durchgeführt wird, ehe das Klemmen des Wulstkerns mit größerem Durchmesser durchgeführt wird.

## Claims

1. Radially expandable building drum (1) intended for the manufacture of an adapter for mounting a tyre on a rim, comprising an interior bead (2') and an exterior bead connected by a reinforcement (3'), the said drum comprising a central shaft (3), a first set (10) of segments (100) and a second set (20) of segments (200), all the segments being arranged circumferentially around the shaft (3) to form a generally cylindrically shaped external face (50) of the drum, **characterized in that** the segments (100) of the first set (10) and the segments (200) of the second set (20) face one another axially and **in that** the said drum (1) is designed to allow different radial expansion of the segments of the first set (10) in relation to the segments of the second set (20) of segments between two working positions.

2. Drum according to Claim 1, **characterized in that** the external face of each segment (100, 200) comprises a groove (103, 203) for accommodating a bead wire.

3. Drum according to either of Claims 1 and 2, **characterized in that** it comprises means for moving the segments between a first working position in which the segments of the first (10) and of the second (20) sets are in the retracted position and the external face (50) of the drum is substantially cylindrical in shape and has one and the same diameter along its length, and a second working position in which the segments are in an expanded position so that the segments of the second set (20) exhibit a greater diameter than the segments of the first set (10) and the external face (50) comprises two parts (51,52) of substantially cylindrical shape of different diameters.

4. Drum according to any one of the preceding claims, **characterized in that** the axially internal face of the segments (100) of the first set (10) comprises teeth which axially interpenetrate with the teeth of the axially external face of the segments (200) of the second set (20).

5. Drum according to any one of the preceding claims, **characterized in that** it comprises a single drive means driving the movement of the two sets of segments (10, 20) simultaneously.

6. Drum according to any one of Claims 1 to 5, **characterized in that** it comprises a drive means for driving the movement of the two sets of segments (10, 20) and designed to move the two sets of segments (10, 20) at different speeds relative to one another.

7. Drum according to Claim 6, **characterized in that** each set of segments (10, 20) is moved in radial translation using a screw (4, 5) - nut (6, 7) device and that each screw receives the rotational movement of the said central shaft.

8. Drum according to Claim 7, **characterized in that** one of the screws (5) of the device receives the rotational movement of the said central shaft (3) by means of a set of gears exhibiting a reduction ratio.

9. Drum according to Claim 8, **characterized in that** the pinions of the said gear set are interchangeable and mounted with the possibility of synchronization in any relative position.

10. Drum according to any one of Claims 7 to 9, **characterized in that** each set of segments (10, 20) of the drum is connected to the screw (4, 5) - nut (6,7) device by an articulated links mechanism (60, 70).

11. Drum according to any one of the preceding claims, **characterized in that** it comprises a flexible sleeve designed to cover its external face.

12. Drum according to any one of the preceding claims, **characterized in that** it comprises ply-turning devices (30, 40) situated each at one end of the drum and radially expandable at the same time as a set of segments.

13. Drum according to Claim 12, **characterized in that** the said ply-turning devices (30, 40) are retractable under the external face (50) of the drum (1).

14. Method of assembly for the manufacture of a tyre adapter used for mounting a tyre on a wheel rim comprising an interior bead (2') and an exterior bead connected by a reinforcement (3'), comprising the following steps:
- laying the rubber components on a cylindrical surface of a drum according to claim 1;
- laying two bead wires on the rubber components in grooves provided for this purpose in each set of segments;
- differently radially expanding the segments of the first set (10) in relation to the segments of the second set (20) of segments between two working positions in order to entrap the bead wires within the rubber components.

15. Method according to Claim 14, **characterized in that** the smaller-diameter bead wire is entrapped in a groove provided for that purpose in the first set of segments before the larger-diameter bead wire is entrapped.
